# EUROPÄISCHE PATENTSCHRIFT

(11) **EP 2 686 084 B1**
(45) Veröffentlichungstag und Bekanntmachung des Hinweises auf die Patenterteilung: **31.12.2014**
(21) Anmeldenummer: 11710406.7
(22) Anmeldetag: 16.03.2011
(51) Int. Cl.: B01D 46/00

(54) **VORRICHTUNG ZUR REINIGUNG EINER FILTERWAND ALS TEIL EINER LUFTREINIGUNGSANLAGE**
APPARATUS FOR CLEANING A FILTER WALL AS PART OF AN AIR PURIFICATION PLANT
DISPOSITIF DESTINÉ AU NETTOYAGE D'UNE PAROI FILTRANTE, FAISANT PARTIE D'UN SYSTÈME D'ÉPURATION DE L'AIR

(43) Veröffentlichungstag der Anmeldung: 22.01.2014
(73) Patentinhaber: Luwa Air Engineering AG, 8610 Uster (CH)
(72) Erfinder: REMSCHAK, Andre, CH-8335 Hittnau (CH); FAEH, Roman, CH-8335 Hittnau (CH)
(74) Vertreter: Schaad, Balass, Menzl & Partner AG
(86) Internationale Anmeldenummer: PCT/CH2011/000054
(87) Internationale Veröffentlichungsnummer: WO 2012/122660

(56) Entgegenhaltungen:
- EP-A1- 0 497 732
- DE-A1-102008 035 681
- JP-U- H0 161 915
- JP-U- 48 064 870

## Beschreibung

Die vorliegende Erfindung betrifft eine Vorrichtung zur Reinigung einer Filterwand - als Teil einer Luftreinigungsanlage - gemäss Patentanspruch 1.

Die Dokumente JP 48 064870 U, EP 0 497 732 A1, JP H01 61915 U und DE 10 2008 035681 A1 offenbaren Reinigungsvorrichtungen für Filterwände, bei welchen eine Absaugdüse über mindestens zwei Antriebsorgane horizontal und vertikal über die Filteroberfläche verfahrbar ist. Aus Dokument JP 48 064870 U ist zudem bekannt, dass die zwei Antriebsorgane als Vortrum und Rücktrum mit Umlenkrädern ausgeführt sind.

Der Einsatz von Luftreinigungsanlagen ist in der Textilindustrie dahingehend von Bedeutung, dass die Luft beim Fertigen von Textilprodukten auf Grund von Staub und Fusseln verunreinigt wird, welche sich dann auf dem Textilgarn ablagern. Dies wiederum hat einen erheblichen negativen Einfluss auf die Qualität der gefertigten Textilprodukte. Die Luftreinigungsanlagen sind üblicherweise raumfüllend und weisen meterhohe Filterwände auf, welche die zu reinigende Luft filtern. Dabei lagern sich der Staub und die Fusseln an den Filterwänden und teilweise am Boden ab, die dann mittels Saugdüsen gereinigt werden müssen, damit ausreichend Luft gefiltert werden kann.

Beim Reinigen einer Filterwand sollte im optimalen Fall die gesamte Filterwand mittels einer in vertikaler und horizontaler Bewegungsrichtung bewegbaren Vorrichtung gereinigt werden können. Dies ist heutzutage mit aufwändigen hochtechnischen Geräten möglich, bei welchen beispielsweise eine elektronische Steuerung und Endschalter zum Einsatz kommen; jedoch ist der Einsatz von solchen hochtechnischen Geräten gerade in Schwellenländern nicht wünschenswert, da die dortigen Anwender oftmals mit den komplizierten hochtechnischen Geräten nicht zurecht kommen und die Kosten für diese Geräte sehr hoch sind.

Es ist daher eine Aufgabe der vorliegenden Erfindung, eine einfache und kostengünstige Vorrichtung zur Reinigung einer Filterwand als Teil einer Luftreinigungsanlage bereitzustellen.

Diese Aufgabe wird mit einer Vorrichtung gelöst, welche die Merkmale des Patentanspruchs 1 aufweist.

Die Vorrichtung gemäss dem Patentanspruch 1 dient der Reinigung mindestens einer Filterwand als Teil einer Luftreinigungsanlage für die Industrie, insbesondere Textilindustrie. Die Vorrichtung weist eine Horizontalschiene auf, an welcher ein Wagen zwischen einem ersten Ende und einem zweiten Ende eines Arbeitsweges hin und her bewegbar geführt ist. Zudem weist die Reinigungsanlage eine am Wagen befestigte Vertikalschiene auf, an welcher eine Absaugdüse zwischen einem oben liegenden Ende und einem unten liegenden Ende eines Vertikalweges rauf und runter bewegbar geführt ist. Ein in sich geschlossenes erstes Antriebsorgan und ein in sich geschlossenes zweites Antriebsorgan sind mittels eines einzigen Antriebsmotors in gleichbleibender Drehrichtung gemeinsam antreibbar. Das erste Antriebsorgan, ein erstes Vortrum und ein erstes Rücktrum bildend, ist beim ersten Ende des Arbeitsweges um ein erstes Umlenkrad und beim zweiten Ende des Arbeitsweges um ein zweites Umlenkrad geführt. Ein am ersten Antriebsorgan angeordnetes Mitnehmerorgan steht mit einem am Wagen befestigten Führungsorgan immer in Eingriff, und das Führungsorgan verläuft quer zum ersten Vortrum und zum ersten Rücktrum. Das zweite Antriebsorgan wirkt permanent mit einem am Wagen gelagerten Abnehmerrad zusammen. Ein in sich geschlossenes drittes Antriebsorgan, ein weiteres Vortrum und ein weiteres Rücktrum bildend, ist beim oben liegenden Ende des Vertikalweges um ein oben liegendes Umlenkrad und beim unten liegenden Ende des Vertikalweges um ein unten liegendes Umlenkrad geführt. Ein am dritten Antriebsorgan angeordnetes weiteres Mitnehmerorgan steht mit einem mit der Absaugdüse verbundenen weiteren Führungsorgan immer in Eingriff, das weitere Führungsorgan verläuft quer zum weiteren Vortrum und zum weiteren Rücktrum des dritten Antriebsorgans, und das dritte Antriebsorgan ist mittels des Abnehmerrades angetrieben. Die Umlaufgeschwindigkeit des ersten Antriebsorgans ist unterschiedlich zur Umlaufgeschwindigkeit des zweiten Antriebsorgans.

Ein wesentlicher Kern der vorliegenden Erfindung ist die unterschiedliche Umlaufgeschwindigkeit des ersten zum zweiten Antriebsorgan, denn nur so ist gewährleistet, dass die Absaugdüse sich in vertikaler Richtung hin und her bewegen kann. Dabei läuft bei einer vollständigen Umdrehung des ersten Antriebsorgans die Absaugdüse, wegen der unterschiedlichen Umlaufgeschwindigkeit des zweiten Antriebsorgans, entweder mit einer höheren oder niedrigeren Frequenz entlang der Vertikalschiene rauf und runter. Dies hat zur Folge, dass mit der Absaugdüse ein Reinigungsprofil auf der Filterwand in Form eines Zick-Zacks entsteht. Das Reinigungsprofil kann abgesehen von den Umlaufgeschwindigkeiten der Antriebsorgane zusätzlich durch das Übertragungsverhältnis der Antriebesorgane optimiert werden, so dass die Filterwand nach mehrfachen Umläufen der Antriebsorgane mittels der Absaugdüse vollständig gereinigt werden kann. Hierbei sollte bei der Einstellung der optimalen Übertragungsverhältnisse und Umlaufgeschwindigkeiten der Antriebsorgane vermieden werden, dass eine gleiche Stelle auf der Filterwand mehrfach gereinigt und andere Stellen auf der Filterwand von der Reinigung ausgelassen werden. Die erfindungsgemässe Vorrichtung ermöglicht also auf einfache Art und Weise eine kostengünstige und effiziente Reinigung der gesamten Filterwandfläche. Ein weiterer Vorteil der vorliegenden Erfindung ist der rein mechanische Antrieb ohne eine aufwändige elektronische Steuerung und ohne einen Endschalter, wobei der einzige Antriebsmotor kontinuierlich und ohne Verzögerungen die Antriebsorgane gleichermassen antreibt.

Bei einer bevorzugten Ausführungsform ist das zweite Antriebsorgan zur Vergrösserung des Umschlingungswinkels des Abnehmerrades um zwei am Wagen gelagerte Führungsrollen und zwischen diesen um das Abnehmerrad geführt. Dank der beiden am Wagen gelagerten Führungsrollen ist das zweite Antriebsorgan um das Abnehmerrad sicher geführt und erhöht entsprechend die Betriebssicherheit und die Lebensdauer des zweiten Antriebsorgans. Des Weiteren wird mittels des vergrösserten Umschlingungswinkels die Abnützung des Abnehmerrades verringert.

Bei einer bevorzugten Ausführungsform ist die Umlaufgeschwindigkeit des zweiten Antriebsorgans grösser als die Umlaufgeschwindigkeit des ersten Antriebsorgans. Dies bewirkt, dass die Vertikalbewegung der Absaugdüse schneller als die Horizontalbewegung läuft, selbst dann, wenn das Übertragungsverhältnis vom Abnehmerrad am Wagen zum oben liegenden Umlenkrad des dritten Antriebsorgans gleich gross ist. Entsprechend ist über die höhere Umlaufgeschwindigkeit des zweiten Antriebsorgans zum ersten Antriebsorgan die Frequenz der Vertikalbewegung der Absaugdüse für den Reinigungsprozess der Filterwand optimal einstellbar.

Alternativ wäre es aber auch denkbar, dass die Umlaufgeschwindigkeit des ersten Antriebsorgans grösser als diejenige des zweiten Antriebsorgans ist und damit die Horizontalbewegung der Absaugdüse schneller als die Vertikalbewegung läuft.

Bei einer bevorzugten Ausführungsform sind das erste Umlenkrad und das zweite Umlenkrad des ersten Antriebsorgans gleich gross. Dies hat den Vorteil, dass das Führungsorgan des ersten Antriebsorgans optimal an die Geometrie des ersten und zweiten Umlenkrades angepasst werden kann und somit eine platzsparende Lösung für den Horizontalantrieb bietet.

Bei einer bevorzugten Ausführungsform ist ein in sich geschlossenes Zugorgan um ein mittels des Antriebsmotors angetriebenes erstes Antriebsrad und ein mit dem ersten Umlenkrad drehfest auf einer gemeinsamen Zwischenwelle gelagertes Zwischenrad geführt. Dies gewährleistet eine platzsparende Lösung, bei dem das am ersten Antriebsorgan angeordnete Mitnehmerorgan mit dem am Wagen befestigten Führungsorgan ungehinderte zwischen dem ersten Ende und zweiten Ende des Arbeitsweges bewegt werden kann. Zusätzlich kann das Übertragungsverhältnis zwischen dem Zwischenrad des Zugorgans und dem ersten Umlenkrad des ersten Antriebsorgans derart gestaltet sein, dass wie oben erläutert die Umlaufgeschwindigkeit des ersten Antriebsorgans kleiner als die Umlaufgeschwindigkeit des zweiten Antriebsorgans ist.

Alternativ könnte auch eine andere Antriebsart, beispielsweise mittels eines Zahnrades und einer Stange, das erste Antriebsorgan platzsparend antreiben.

Bei dieser Ausführungsform ist das zweite Antriebsorgan vorzugsweise um ein gleichachsig mit dem ersten Antriebsrad gelagertes zweites Antriebsrad und ein drittes Umlenkrad geführt, wobei das dritte Umlenkrad mindestens gleich weit von der Zwischenwelle entfernt ist wie das zweite Ende des Arbeitsweges. Da das dritte Umlenkrad des zweiten Antriebsorgans mindestens gleich weit von der Zwischenwelle entfernt ist wie das zweite Ende des Arbeitsweges, kann sich das am Wagen angeordnete Mitnehmerorgan problemlos zwischen dem ersten Ende und dem zweiten Ende des Arbeitsweges entlang der Horizontalschiene hin und her bewegen.

Bei einer bevorzugten Ausführungsform sind das oben liegende Umlenkrad und das unten liegende Umlenkrad des dritten Antriebsorgans gleich gross. Dies hat den Vorteil, dass das weitere Führungsorgan des dritten Antriebsorgans optimal an die Geometrie des oben liegenden und unten liegenden Umlenkrades angepasst werden kann und somit eine platzsparende Lösung des Vertikalantriebs bietet.

Bei einer bevorzugten Ausführungsform sind das erste, zweite und dritte Antriebsorgan unabhängig voneinander als Ketten, Zahnriemen oder Riemen ausgebildet.

Bei einer besonders bevorzugten Ausführungsform sind die ersten, zweiten und dritten Antriebsorgane jeweils als Ketten ausgeführt und wirken mit Kettenrädern zusammen. Dies gewährleistet einen zuverlässigen Antrieb unter Vermeidung von Schlupf. Des Weiteren ist keine Vorspannung nötig, so dass die Lager der Wellen entlastet sind.

Zudem wird eine Luftreinigungsanlage für die Industrie, insbesondere Textilindustrie, mit mindestens zwei einander gegenüberliegenden Filterwänden offenbart, wobei die zu reinigende Luft über eine Luftzufuhröffnung in einem Boden in einen Raum zwischen den beiden Filterwänden einströmt und dann zur Reinigung die beiden Filterwände durchströmt, wobei die Luftzufuhröffnung im Boden sich wenigstens annährend über die gesamte Länge und wenigstens annährend über den gesamten Abstand der beiden Filterwände erstreckt.

Dies hat den Vorteil, dass kein Staub oder Fusseln den Boden zwischen den einander gegenüberliegenden Filterwänden verunreinigen, wodurch sich eine Reinigung des Bodens, z.B. mit einem zusätzlichen Sauger, erübrigt. Dies wiederum erlaubt eine wesentliche Zeitersparnis beim Luftreinigungsprozess.

Bei einer bevorzugten Ausführungsform weist die Luftreinigungsanlage ausserdem eine Vorrichtung zur Reinigung der Filterwände auf.

Besonders bevorzugt weist die Luftreinigungsanlage die oben beschriebene erfindungsgemässe Vorrichtung auf. Dadurch kann die Reinigung der Luftreinigungsanlage optimiert werden. Vorzugsweise ist die Absaugdüse als Doppelabsaugdüse ausgebildet.

Weitere Vorteile und Eigenschaften der erfindungsgemässen Vorrichtung zur Reinigung der Filterwände als Teil einer Luftreinigungsanlage und der Luftreinigungsanlage gehen aus der nachstehenden Beschreibung eines Ausführungsbeispiels hervor, welches anhand der Zeichnung erläutert wird.

Es zeigen rein schematisch:
- Fig. 1: eine perspektivische Ansicht einer Luftreinigungsanlage mit einer erfindungsgemässen Vorrichtung zur Reinigung von Filterwänden als Teil der Luftreinigungsanlage;
- Fig. 2: eine perspektivische Ansicht wesentlicher Elemente der Vorrichtung gemäss Fig. 1;
- Fig. 3: eine vergrößerte Darstellung eines in Fig. 2 mit III markierten Ausschnitts der Vorrichtung;
- Fig. 4: ein Ansicht eines in gemäss Fig. 2 dargestellten ersten Antriebsorgans der Vorrichtung mit einem am ersten Antriebsorgan angeordneten Mitnehmerorgan, welches mit einem an einem Wagen befestigten Führungsorgan immer in Eingriff steht;
- Fig. 5: eine vergrößerte Darstellung eines in Fig. 4 mit V markierten Ausschnitts;
- Fig. 6: eine vergrößerte Darstellung eines in Fig. 2 mit VI markierten Ausschnitts eines dritten Antriebsorgans mit einem am dritten Antriebsorgan angeordneten weiteren Mitnehmerorgan, welches mit einem mit einer Absaugdüse verbundenen weiteren Führungsorgan immer in Eingriff steht;
- Fig. 7: eine Frontansicht der in Fig. 1 dargestellten Luftreinigungsanlage mit mehreren Filterkästen in einer Reihe hintereinander angeordnet; und
- Fig. 8: eine Draufsicht der in Fig. 7 dargestellten Luftreinigungsanlage.

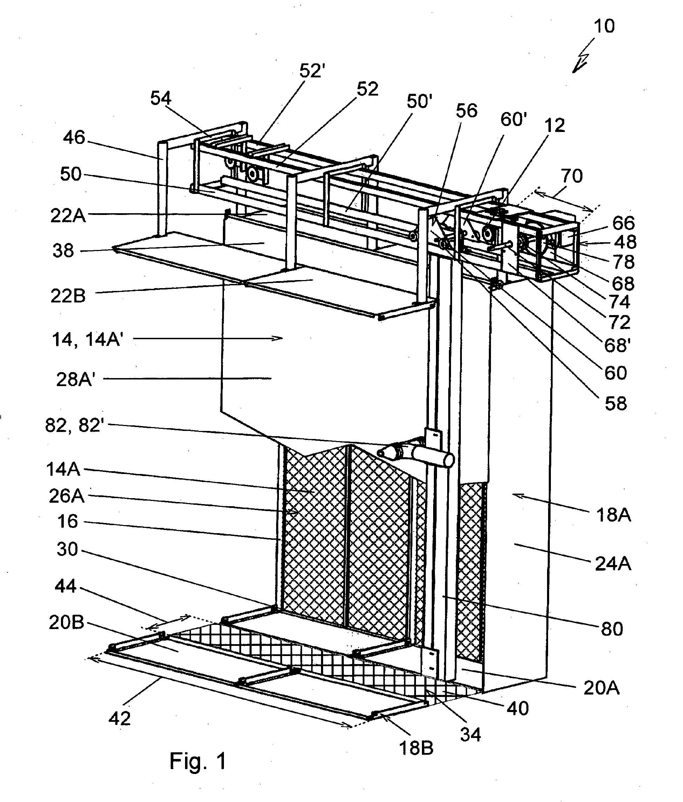

Die in Fig. 1 teilweise dargestellte Luftreinigungsanlage 10 mit einer erfindungsgemässen Vorrichtung 12 zur Reinigung einer Filterwand 14 ist mittels eines Rahmengestells 16 modular aufgebaut und verschraubt. (Zur besseren Illustration sind nicht alle Teile des Rahmengestells 16 gezeigt).

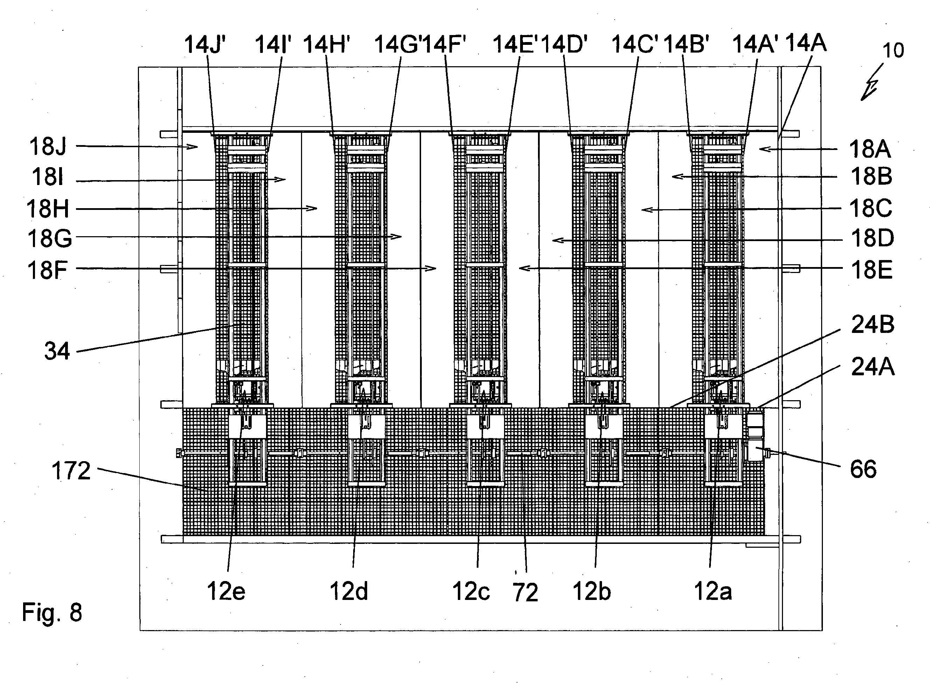

Die Luftreinigungsanlage 10 umfasst in vorliegendem Ausführungsbeispiel zwei parallel angeordneten Filterkästen 18A, 18B, wobei der Filterkasten 18B (siehe Fig. 8) in Fig. 1 nur über eine geschlossene Bodenplatte 20B und eine geschlossene Deckplatte 22B angedeutet ist.

Der Filterkasten 18A umfasst eine geschlossene Bodenplatte 20A, eine geschlossene Deckplatte 22A, eine geschlossene Frontplatte 24A und zwei sich parallel gegenüberliegende Filterwände 14A, 14A', wobei der Filterkasten 18A auf der der Frontplatte 24A gegenüber liegenden Seite zur Abfuhr der gefilterten Luft offen ist.

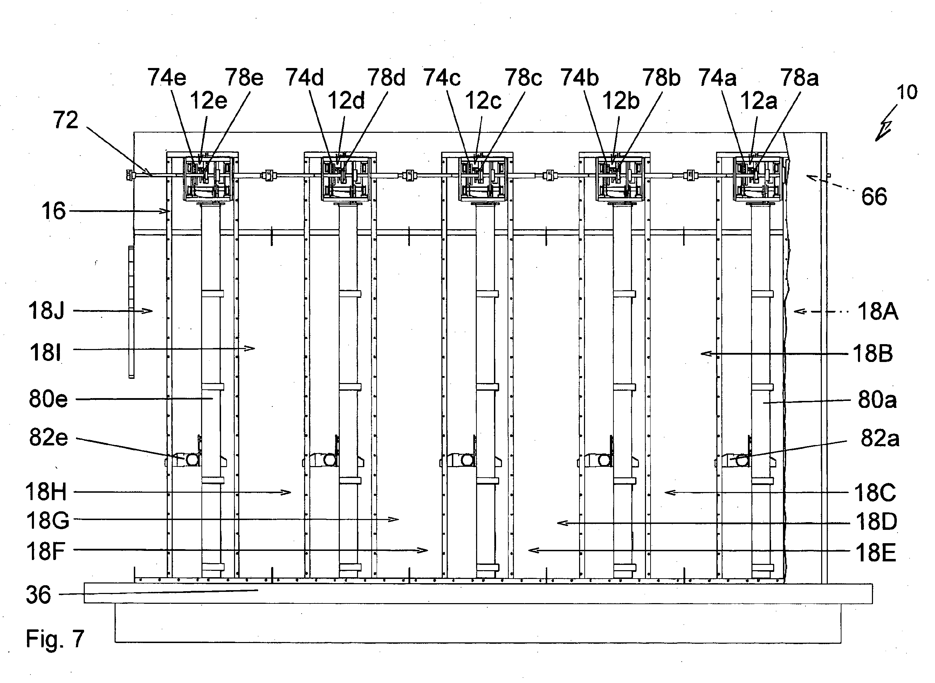

Die beiden gegenüberliegenden Filterwände 14A, 14A' sind als Wellgitter 26A ausgeführt und von einem Filtervlies 28A' abgedeckt. Das Filtervlies 28A' ist an einem unteren Rand 30 des Filterkastens 18A befestigt und über die gesamte Oberfläche der Filterwand 14A nach oben gespannt. Das Filtervlies 28A' dient der Reinigung der zu reinigenden Luft, welche in vorliegendem Ausführungsbeispiel durch eine Luftzufuhröffnung 34 in einem Boden 36 (siehe Fig. 7) in einen Raum 38 zwischen den der Filterwand 14A' des ersten Filterkastens 18A und einer Filterwand 14B' (siehe Fig. 8) des benachbarten Filterkastens 18B einströmt und dann die beiden Filterwände 14A' bzw. 14B' durchströmt.

Die Luftzufuhröffnung 34 kann mit einem Bodengitter 40 (in Fig. 1 schematisch angedeutet und nicht massstabsgetreu) versehen sein, welches sich annährend über eine gesamte Länge 42 der Filterwände 14A', 14B' und wenigstens annährend über einen gesamten Abstand 44 zwischen den beiden Filterwänden 14A', 14B' erstreckt.

Die Deckplatten 22A, 22B der beiden benachbarten Filterkästen 18A, 18B sind mittels u-förmiger Tragbügel 46 miteinander verbunden. Der Tragbügel 46 überbrückt den Raum 38 zwischen den beiden Filterkästen 18A, 18B derart, dass eine Horizontalschiene 48 oberhalb der beiden Filterkästen 18A, 18B an den Tragbügeln 46 angeordnet werden kann.

Die Horizontalschiene 48 als Teil der Vorrichtung 12 ist vorzugsweise parallel zu den beiden Filterwänden 14A', 14B' ausgerichtet und umfasst zwei parallel zueinander angeordnete unten liegende Führungsschienen 50, 50' und zwei ebenfalls parallel dazu angeordnete oben liegende Sicherungsschienen 52, 52'. Die Führungsschienen 50, 50' und Sicherungsschienen 52,52' sind mittels u-förmiger Haltebügel 54 in Position gehalten. Die Haltebügel 54 sind wiederum mit den Tragbügeln 46 verschraubt, so dass die Horizontalschiene 48 oberhalb der beiden Filterkästen 18A, 18B zwischen diesen gesichert ist.

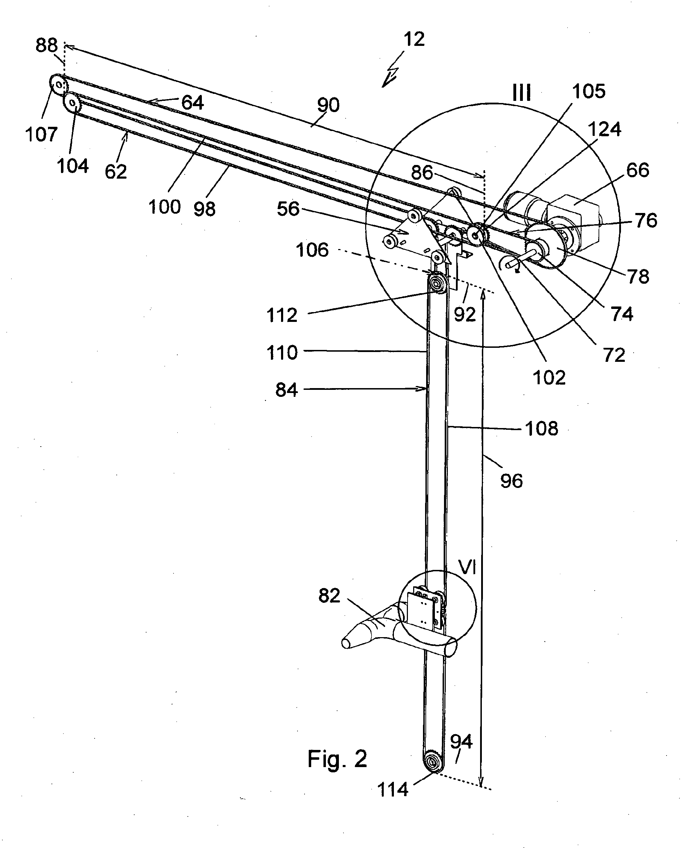

Ein Wagen 56 ist zwischen den beiden Führungsschienen 50, 50' und Sicherungsschienen 52, 52' angeordnet und mit Rollen versehen. Der Wagen 56 umfasst zwei parallel zueinander angeordnete dreieckige Schilder 60, 60'. Die an den Schildern 60, 60' des Wagens 56 beidseitig unten angeordneten vier Wagenrollen 58 laufen auf den beiden Führungsschienen 50, 50', während die beiden oben liegenden Sicherungsrollen 58' (siehe Fig. 2) entlang der beiden Sicherungsschienen 52, 52' laufen.

Ein Antriebsmotor 66 treibt ein in sich geschlossenes erstes Antriebsorgan 62 (siehe Fig. 2) und ein in sich geschlossenes zweites Antriebsorgan 64 (siehe Fig. 2) in gleichbleibender Drehrichtung gemeinsam an. Dabei dient das erste Antriebsorgan 62 der hin und her Bewegung des Wagens 56. Bei einer Richtungsumkehr des Wagens 56, erfährt dieser Verzögerungen oder Beschleunigungen, welche eine Kippbewegung ausüben können. Aus diesem Grund dienen die beiden oberen Sicherungsrollen 58' de Wagens 56 der Kippsicherung.

In einem Endbereich 70 der Horizontalschiene 48 ist der Antriebsmotor 66 an einer Metallplatte 68 befestigt. Eine Motorwelle 72 des Antriebsmotors 66 durchgreift fest verbunden ein erstes Antriebsrad 74 eines in sich geschlossenen Zugorgans 76 (siehe Fig. 2) und ein zweites Antriebsrad 78 des zweiten Antriebsorgans 64. Auf der Metallplatte 68' gegenüberliegenden Seite durchgreift die Motorwelle 72 des Antriebsmotors 66 drehbar gelagert eine weitere Metallplatte 68'.

Zwischen den beiden benachbarten Filterkästen 14A, 14B' ist eine am Wagen 56 befestigte Vertikalschiene 80 angeordnet, welche mittels des Wagens 56 entlang der Horizontalschiene 48 hin und her bewegbar ist. Auf der Vertikalschiene 80 ist eine Absaugdüse 82 mittels eines in sich geschlossenen dritten Antriebsorgans 84 (siehe Fig. 2) rauf und runter bewegbar geführt. Zur Reinigung der einander zugewandten Filterwände 14A' bzw. 14B' von zwei benachbarten Filterkästen 18A, 18B ist die Absaugdüse 82 als Doppelabsaugdüse 82' ausgebildet.

Durch die horizontale und vertikale Bewegung der Doppelabsaugdüse 82', kann die gesamte Filterwand 14A' bzw. 14B' lückenlos gereinigt werden. Hierbei sei erwähnt, dass ein Reinigungsprofil auf dem Filtervlies 28A' von einer Umlaufgeschwindigkeit des ersten, zweiten und dritten Antriebsorgans 62, 64, 84 (siehe Fig. 2) abhängt, worauf zu einem späteren Zeitpunkt genauer eingegangen wird.

Der in Fig. 2 dargestellte Wagen 56 ist zwischen einem ersten Ende 86 und einem zweiten Ende 88 eines Arbeitsweges 90 hin und her bewegbar geführt, und die Absaugdüse 82 ist zwischen einem oben liegenden Ende 92 und einem unten liegenden Ende 94 eines Vertikalweges 96 rauf und runter bewegbar geführt.

Das erste Antriebsorgan 62 und das zweite Antriebsorgan 64 sind, wie oben ausgeführt, mittels des Antriebsmotors 66 in gleichbleibender Drehrichtung gemeinsam antreibbar und sind im Innenraum der Horizontalschiene 48, wie aus Fig. 1 ersichtlich, parallel zu den Führungsschienen 50, 50' und Sicherungsschienen 52, 52' angeordnet, so dass der Arbeitsweg 90 entlang dieser Führungsschienen 50, 50' und Sicherungsschienen 52, 52' bzw. der Horizontalschiene 48 verläuft.

Das erste Antriebsorgan 62 bildet ein erstes Vortrum 98 und ein erstes Rücktrum 100 aus und ist beim ersten Ende 86 des Arbeitsweges 90 um ein erstes Umlenkrad 102 und beim zweiten Ende 88 des Arbeitsweges 90 um ein zweites Umlenkrad 104 geführt.

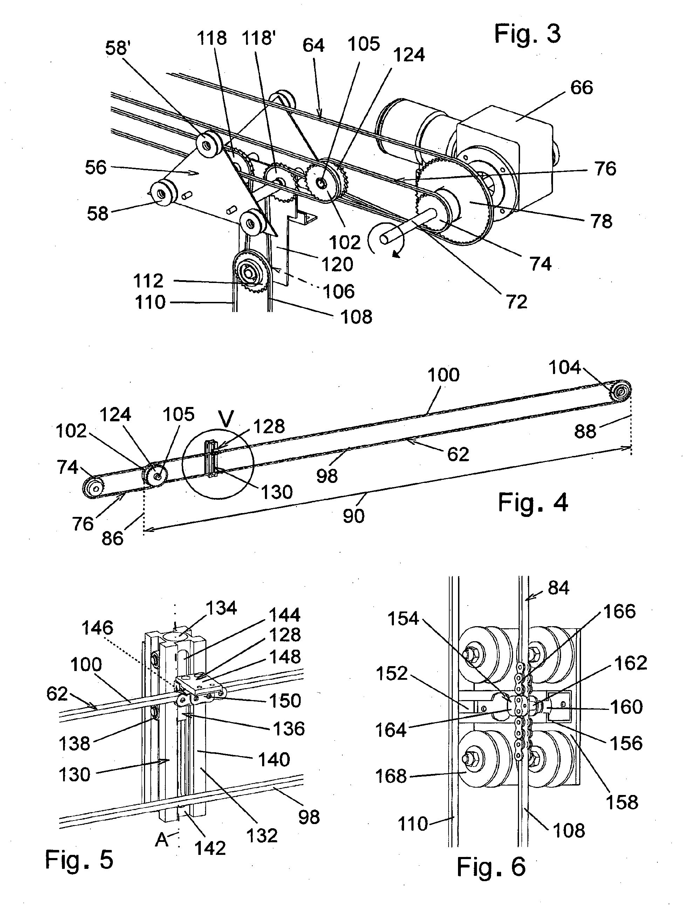

Das zweite Antriebsorgan 64 wirkt permanent mit einem am Wagen 56 gelagerten Abnehmerrad 106 (gestrichelt gezeichnet, da hinter dem oben liegenden Umlenkrad 112 angeordnet) zusammen. Das genaue Zusammenwirken des zweiten Antriebsorgans 64 mit dem Abnehmerrad 106 und dem dritten Antriebsorgan 84 wird in Zusammenhang mit Fig. 3 im Detail ausgeführt. Das zweite Antriebsorgan 64 ist um ein gleichachsig mit dem ersten Antriebsrad 74 gelagertes zweites Antriebsrad 78 und ein drittes Umlenkrad 107 geführt, wobei das dritte Umlenkrad 107 mindestens gleich weit, hier weiter von einer Zwischenwelle 105, auf welcher das erste Umlenkrad 102 sitzt, entfernt ist wie das zweite Ende 88 des Arbeitsweges 90.

Da das zweite Antriebrad 78 des zweiten Antriebsorgans 64 grösser als das dritte Umlenkrad 107 des zweiten Antriebsorgans 64 ist, ist in Abhängigkeit von der Position des Wagens 56 auf dem Arbeitsweg 90 die Länge vom unteren Trum, also dem ersten Vortrum 98 unterschiedliche zum obere Trum, also dem ersten Rücktrum 100. Um diesen Längenunterschied zu kompensieren, besteht die Möglichkeit eine Federrolle (nicht gezeigt) einzusetzen, welche den Hub des ersten Rücktrums 100 entsprechend anpasst.

Das dritte Antriebsorgan 84 bildet ein weiteres Vortrum 108 und ein weiteres Rücktrum 110 aus und ist beim oben liegenden Ende 92 des Vertikalweges 96 um ein oben liegendes Umlenkrad 112 und beim unten liegenden Ende 94 des Vertikalweges 96 um ein unten liegendes Umlenkrad 114 geführt. Des Weiteren ist das dritte Antriebsorgan 84 parallel zur Vertikalschiene 80 angeordnet, so dass der Vertikalweg 96 entlang dieser Vertikalschiene 80 verläuft.

Die Umlaufgeschwindigkeit des ersten Antriebsorgans 62 ist unterschiedlich zur Umlaufgeschwindigkeit des zweiten Antriebsorgans 64, damit sich die Absaugdüse 82 überhaupt in vertikaler Richtung bewegen kann. Denn würde die Umlaufgeschwindigkeit des ersten Antriebsorgans 62 und des zweiten Antriebsorgans 64 gleich sein, würde die Absaugdüse 82 keine Vertikalbewegung erfahren und somit immer auf gleicher Höhe auf der Filterwand 14 reinigen, was nicht Ziel der vorliegenden Erfindung ist.

Durch eine bevorzugt höhere Umlaufgeschwindigkeit des zweiten Antriebsorgans 64 als das erste Antriebsorgan 62, kann auf der Filterwand 14 ein zick-zack-förmiges Reinigungsprofil (nicht gezeigt) erzeugt werden, welches dazu dient die gesamte Oberfläche der Filterwand 14 schon nach einigen Umläufen der Antriebsorgane 62, 64 zu reinigen.

Mittels einer optimalen Anpassung der Umlaufgeschwindigkeiten und der Übertragungsverhältnisse des ersten, zweiten und dritten Antriebsorgans 62, 64, 84 ist ein optimaler Reinigungsprozess Zur Reinigung der Filterwand 14 mit der vorliegenden Erfindung auf einfache Art und Weise möglich.

In bevorzugter Weise sind das erste Umlenkrad 102 und das zweite Umlenkrad 104 des ersten Antriebsorgans 62 sowie das oben liegende Umlenkrad 112 und das unten liegende Umlenkrad 114 des dritten Antriebsorgans 84 gleich gross. Hingegen sind das drittes Umlenkrad 107 und das zweite Antriebsrad 78 des zweiten Antriebsorgans 64 vorzugsweise unterschiedlich gross, insbesondere das zweite Antriebsrad 78 grösser, vorzugsweise grösstmöglichst, ausgestaltet. Dies hat den Vorteil, dass die Umlaufgeschwindigkeit des zweiten Antriebsorgans 64 grösser als die Umlaufgeschwindigkeit des ersten Antriebsorgans 62 ist und so auf einfache Art und Weise das oben erläuterte gewünschte Reinigungsprofil auf dem Filtervlies erzeugt werden kann, um die Filterwand vollständig zu reinigen.

Das in Fig. 3 als Ausschnitt dargestellte zweite Antriebsorgan 64 ist um zwei am Wagen 56 gelagerte Führungsrollen 118, 118' und zwischen diesen um das Abnehmerrad 106 Ω-förmig geführt. Diese Anordnung hat den Vorteil, dass der Umschlingungswinkel des Abnehmerrades 106 vergrössert wird. In vorliegendem Ausführungsbeispiel ist das Abnehmerrad 106 an einem am Wagen 56 befestigten Bügel 120 von den beiden Führungsrollen 118, 118' beabstandet angeordnet. Diese Ausführungsform erlaubt dem Wagen 56 das ungehinderte Bewegen zwischen dem ersten Ende 86 und zweiten Ende 88 des Arbeitsweges 90 ohne mit dem oben liegenden Umlenkrad 112 des dritten Antriebsorgans 84 in Konflikt zu geraten.

Wie in Fig. 1 schon ausgeführt, zeigt Fig. 3 in vergrösserter Darstellung, wie die Motorwelle 72 des Antriebsmotors 66 das erste Antriebsrad 74 des Zugorgans 76 und das zweite Antriebsrad 78 des zweiten Antriebsorgans 64 durchgreift und in gleichbleibender Drehrichtung kontinuierlich antreibt.

Das in Fig. 4 dargestellte in sich geschlossene erste Antriebsorgan 62 ist dem in sich geschlossenen Zugorgan 76 nachgeschaltet, wobei das Zugorgan 76, wie in Fig. 2 und Fig. 3 gezeigt, vom Antriebsmotor 66 über das erste Antriebsrad 74 angetrieben wird. Ein Zwischenrad 124 des Zugorgans 76 ist auf der gemeinsamen Zwischenwelle 105 mit dem ersten Umlenkrad 102 des ersten Antriebsorgans 62 gelagert. Vorzugsweise ist das Übersetzungsverhältnis zwischen dem Zwischenrad 124 und dem ersten Umlenkrad 102 1:1. Entsprechend treibt das Zwischenrad 124 des Zugorgans 76 das erste Antriebsorgan 62 an.

Dem ersten Antriebsorgan 62 ist ein Mitnehmerorgan 128 fest angeordnet und steht mit einem am Wagen 56 befestigten Führungsorgan 130 immer in Eingriff. Beim Umlaufen des ersten Antriebsorgans 62 bewegt sich das Mitnehmerorgan 128 zwischen dem ersten Ende 86 und dem zweiten Ende 88 des Arbeitsweges 90 hin und her, wobei das Führungsorgan 130 quer zum ersten Vortrum 98 und zum ersten Rücktrum 100 des ersten Antriebsorgans 62 verläuft.

Das in Fig. 4 und 5 dargestellte Führungsorgan 130 des ersten Antriebsorgans 62 ist ein aus Metall gefertigtes, zylinderförmiges Profil 132 mit einer Bohrung 134 entlang einer Längsachse A des Profils 132. Dieses Führungsorgan 130 ist in der Regel mit dem Wagen 56 fest verbunden, jedoch zur besseren Veranschaulichung ist der Wagen 56 nicht gezeigt.

Die Bohrung 134 im Profil 132 ermöglicht einem Mitnehmerwagen 136 als Teil des Mitnehmerorgans 128 die Bewegung entlang der Längsachse A. Der Mitnehmerwagen 136 weist vier Mitnehmerrollen 138 auf, welche entlang von Mitnehmerschienen 140 rauf und runter bewegbar sind.

Die Mitnehmerschienen 140 sind durch Nute 142 im Profil 132, welche parallel zur Längsachse A verlaufen, ausgebildet. Mittels einer Fräsung entlang der Nute 142 vom oberen Zentel zum unteren Zentel des Profils 132, wird eine Lochbohrung 144 erzeugt, durch welche hindurch ein Mitnehmerschaft 146 als Teil des Mitnehmerorgans 128 mit dem Mitnehmerwagen 136 drehbar gelagert ist. Der Mitnehmerschaft 146 wiederum ist mit einer Mitnehmerträgerplatte 148 verschraubt, welche fest mit einer Kette 150 des ersten Antriebsorgans 62 verbunden ist.

Die in Fig. 4 und Fig. 5 gezeigte Momentaufnahme des Mitnehmerorgans 128 zusammen mit dem Führungsorgan 130 befindet sich auf dem ersten Rücktrum 100 des ersten Antriebsorgans 62 und bewegt sich entsprechend der Drehrichtung der Motorwelle 72 des Antriebsmotors 66 mit gleichbleibender Umlaufgeschwindigkeit des ersten Antriebsorgans 62 in Richtung zum ersten Ende 86 des Arbeitsweges 90 fort. Sobald das Mitnehmerorgan 128 zusammen mit dem Führungsorgan 130 das erste Umlenkrad 102 erreicht hat, werden diese abgebremst, so dass das erste Umlenkrad 102, die Kette 150 und die Mitnehmerträgerplatte 148 zusammenwirken und gemeinsam das erste Umlenkrad 102 bis zum ersten Vortrum 98 umlaufen. Während des Umlaufs des ersten Umlenkrades 102 wird der Mitnehmerwagen 136 als Teil des Mitnehmerorgans 128 entlang der Lochbohrung 144 bewegt. Sobald das Mitnehmerorgan 128 das erste Vortrum 98 des ersten Antriebsorgans 62 erreicht hat, wird das Mitnehmerorgan 128 zusammen mit dem Führungsorgan 130 beschleunigt bis wieder die gleichbleibende Umlaufgeschwindigkeit des ersten Antriebsorgans 62 erreicht ist und bewegt sich entsprechend in Richtung zum zweiten Ende 88 des Arbeitsweges 90 fort. Sobald das Mitnehmerorgan 128 mit dem Führungsorgan 130 das zweite Umlenkrad 104 erreicht hat, werden diese wieder abgebremst und das zweite Umlenkrad 104 des ersten Antriebsorgans 62 umlaufen.

Ein in Fig. 2 und Fig. 6 dargestelltes, weiteres Mitnehmerorgan 154 des dritten Antriebsorgans 84 ist zusammen mit einem mit der Absaugdüse 82 verbundenen, weiteren Führungsorgan 156, welches mit einer Trägerplatte 158 verbunden ist, zwischen dem oben liegenden Ende 92 und dem unten liegenden Ende 94 des Vertikalweges 96 rauf und runter bewegbar.

Das weitere Führungsorgan 156 des dritten Antriebsorgans 84 ist c-förmig ausgebildet und weist eine Öffnung 152 auf. Eine weitere Mitnehmerrolle 160 des weiteren Mitnehmerorgans 154 ist mit einem Schaft 162 verbunden, welcher die Öffnung 152 durchgreift und mit einem Halteelement 164 in Verbindung steht. Das Halteelement 164 ist fest mit einer Kette 166 des dritten Antriebsorgans 84 verbunden.

Das weitere Führungsorgan 156 ist auf der der Öffnung 152 gegenüber liegenden Seite mit einer Trägerplatte 158 verschraubt. Die gezeigte Trägerplatte 158 ist so gross, dass mindestens vier weitere Führungsrollen 168 an den freien Ecken der Trägerplatte 158 angeordnet und befestigt sind. Diese weiteren Führungsrollen 168 sind entlang der Vertikalschiene 80 geführt und nehmen entsprechend die auf der Trägerplatte 158 befestigte Absaugdüse 82 mit.

Die in Fig. 2 und Fig. 6 gezeigte Momentaufnahme des weiteren Mitnehmerorgans 154, des weiteren Führungsorgans 156 zusammen mit der Trägerplatte 158 und den weiteren Führungsrollen 168 befindet sich auf dem weiteren Vortrum 108 des dritten Antriebsorgans 84 und bewegt sich entsprechend der Drehrichtung des Abnehmerrades 112 des zweiten Antriebsorgans 64, welches das dritte Antriebsorgan 84 antreibt, mit gleichbleibender Umlaufgeschwindigkeit in Richtung zum unten liegenden Ende 94 des Vertikalweges 96 fort. Sobald das weitere Mitnehmerorgan 154 das unten liegende Umlenkrad 114 erreicht hat, wird die Trägerplatte 158 mit der darauf angebrachten Absaugdüse 82 abgebremst, so dass das unten liegende Umlenkrad 114, die Kette 166 und das Halteelement 164 des weiteren Mitnehmerorgans 154 zusammenwirken und gemeinsam das unten liegende Umlenkrad 114 bis zum weiteren Rücktrum 110 umlaufen. Während des Umlaufs des unten liegenden Umlenkrades 114 wird die weitere Mitnehmerrolle 160 mit dem Schaft 162 entlang der Öffnung 152 bewegt. Sobald die Mitnehmerrolle 160 mit dem Schaft 162 das weitere Rücktrum 110 erreicht hat, wird das weitere Mitnehmerorgan 154 zusammen mit der Trägerplatte 158 und der Absaugdüse 82 beschleunigt bis wieder die gleichbleibende Umlaufgeschwindigkeit des dritten Antriebsorgans 84 erreicht ist und bewegt sich entsprechend in Richtung zum oben liegenden Ende 92 des Vertikalweges 96 fort. Sobald die Trägerplatte 158 zusammen mit der Absaugdüse 82 und dem weiteren Mitnehmerorgan 154 das oben liegende Umlenkrad 112 erreicht hat, wird das weitere Mitnehmerorgan 154 zusammen mit der Trägerplatte 158 und der Absaugdüse 82 abgebremst und das oben liegende Umlenkrad 112 des dritten Antriebsorgans 84 umlaufen.

Fig. 7 verdeutlicht den modularen Aufbau der Luftreinigungsanlage 10 wie im Zusammenhang mit Fig. 1 im Detail ausgeführt. In der Regel sind die Filterkästen 18A-J entweder in einer gemauerten Kammer (nicht gezeigt) aufgestellt oder, wie in Fig. 1 und Fig. 7 ausgeführt, am Rahmengestell 16 befestigt. Vorteilhafterweise reicht es aus, sämtliche ersten Antriebsräder 74a-e und zweiten Antriebsräder 78a-e der jeweiligen Vorrichtung 12a-e mit nur einem einzigen Antriebsmotor 66 (gestrichelt gezeichnet, da von einer Mauer verdeckt) zu betreiben, da diese auf einer gemeinsamen Motorwelle 72 liegen. Somit können zeitgleich mehrere Vorrichtungen 12a-e parallel angetrieben werden, um zeitgleich die Filterwände (nicht gezeigt) der Filterkästen 18A-J mittels der Absaugdüsen 82a-e (nur 82a und 82e bezeichnet) zu reinigen, die wiederum entlang der Vertikalschienen 80a-e (nur 80a und 80e bezeichnet) rauf und runter bewegbar geführt sind.

Fig. 8 zeigt in einer Draufsicht die gleiche Luftreinigungsanlage 10 wie in Fig. 7 in Ansicht gezeigt, wobei anschaulich die Luftzufuhröffnung 34 zu sehen ist, welche im Zusammenhang mit Fig. 1 im Detail besprochen wurde. Die Luftzufuhr erfolgt in vorliegendem Ausführungsbeispiel von unten, und die Luft durchströmt ebenfalls einen Vorraum 172 vor den Filterkästen 18A-J, so dass die Frontplatten 24A-J der Filterkästen 18A-J geschlossen sein sollten. Der Vorraum 172 mit der Luftzufuhröffnung 34 im Boden 36 hat den Vorteil, dass ein weitaus grösserer Querschnitt für die Luftzufuhr erzeugt werden kann. Die zu reinigende Luft wird zu den Filterwänden 14A'-J' geleitet und von diesen gefiltert.

Die Luftzufuhröffnung 34 im Boden 36 erstreckt sich in bevorzugter Weise wenigstens annährend über die gesamte Länge 42 und wenigstens annährend über den gesamten Abstand 44 der beiden Filterwände 14A', 14B' wie in Fig. 1 ausgeführt. Entsprechendes gilt für die in Fig. 8 in Reihe zueinander parallel angeordneten Filterwände 14A', 14B'; 14C', 14D' ; 14E', 14F' ; 14G' , 14H' und 14I', 14J'.

Zur besseren Veranschaulichung der in Fig.1 beschriebenen Luftreinigungsanlage 10 sind in Fig. 8 die Vorrichtung 12a, die Filterwände 14A und 14A' des Filterkastens 18A, die Filterwand 14B des Filterkastens 18B sowie die Frontplatten 24A und 24B bezeichnet.

An dieser Stelle sei erwähnt, dass gängige Luftreinigungsanlagen einen teilweise geschlossenen Boden aufweisen, welcher dazu führt, dass sich der Staub und die Fusseln aus der zu reinigenden Luft auf dem Boden absetzen. Deshalb muss der Boden ebenfalls mit einem Sauger gereinigt werden. Demgegenüber verhindert die aktive Luftzufuhr durch die Luftzufuhröffnung 34 ein Absetzen von Staub und Fusseln, da permanent neue zu reinigende Luft durch die Luftzufuhröffnung 34 strömt. Dadurch lagern sich Staub und Fusseln ausschliesslich an den Filterwänden 14A'-J' ab und nicht mehr am Boden.

Wie in Fig. 2 ausgeführt, ist bevorzugt eine höhere Umlaufgeschwindigkeit für das zweiten Antriebsorgans 64 im Vergleich zum ersten Antriebsorgan 62 vorgesehen, um ein optimales, zick-zack-förmiges Reinigungsprofil auf der Filterwand 14 zu erzeugen, welche wiederum dazu dient die gesamte Oberfläche der Filterwand 14 schon nach einigen Umläufen der Antriebsorgane 62, 64 auf einfache Art und Weise effizient zu reinigen. Durch die höhere Umlaufgeschwindigkeit des zweiten Antriebsorgans 64 zum ersten Antriebsorgan 62, sei noch erwähnt, dass sich entsprechend die Bewegungsfrequenz der Absaugdüse 82 entlang der Vertikalschiene 80 erhöht im Vergleich zur Horizontalbewegung des Wagens 56.

An dieser Stelle sei erwähnt, dass die Bewegungsfrequenz der Absaugdüse 82 entlang der Vertikalschiene 80 davon abhängt, ob sich das Mitnehmerorgan 130 zusammen mit dem Führungsorgan 130, welches mit dem Wagen 56 fest verbunden ist, auf dem ersten Vortrum 98 oder auf dem ersten Rücktrum 100 des ersten Arbeitsorgans 62 befindet. Für den Fall, dass sich der Wagen 56 zusammen mit dem Führungsorgan 130 und dem Mitnehmerorgan 128 auf dem ersten Vortrum 98 in Richtung zum zweiten Ende 88 des Arbeitsweges 90 befindet, wird die Vertikalbewegung der Absaugdüse 82 in Richtung zum unten liegenden Umlenkrad 114 unterstütz. Hingegen bremst der Wagen 56 zusammen mit dem Führungsorgan 130 und dem Mitnehmerorgan 128 die Vertikalbewegung der Absaugdüse 82 in Richtung zum oben liegenden Ende 92 des Vertikalweges 96 ab, wenn sich diese auf dem ersten Rücktrum 100 des ersten Antriebsorgans 62 in Richtung zum ersten Ende 86 des Arbeitsweges 90 bewegen, den die Bewegungsrichtungen wirken einander entgegen.

Daraus ergibt sich die Schlussfolge, dass das oben besprochene Reinigungsprofil nicht nur von den Umlaufgeschwindigkeiten der Antriebsorgans 62, 64, 84 sowie den Übertragungsverhältnissen abhängt, sonder zudem auch noch davon abhängt, ob der Wagen 56 sich auf dem erste Vortrum 98 oder ersten Rücktrum 100 des ersten Antriebsorgans 62 befindet.

Mittels einer optimalen Anpassung der Umlaufgeschwindigkeiten und der Übertragungsverhältnisse des ersten, zweiten und dritten Antriebsorgans 62, 64, 84 ist somit ein optimaler Reinigungsprozess Zur Reinigung der Filterwand 14 mit der vorliegenden Erfindung auf einfache Art und Weise möglich.

## Patentansprüche

1. Vorrichtung zur Reinigung einer Filterwand (14) mit einer Horizontalschiene (48), an welcher ein Wagen (56) zwischen einem ersten Ende (86) und einem zweiten Ende (88) eines Arbeitsweges (90) hin und her bewegbar geführt ist, und einer am Wagen (56) befestigten Vertikalschiene (80), an welcher eine Absaugdüse (82) zwischen einem oben liegenden Ende (92) und einem unten liegenden Ende (94) eines Vertikalweges (96) rauf und runter bewegbar geführt ist; wobei
- ein in sich geschlossenes erstes Antriebsorgan (62) und ein in sich geschlossenes zweites Antriebsorgan (64) mittels eines Antriebsmotors (66) in gleichbleibender Drehrichtung gemeinsam antreibbar sind;
- das erste Antriebsorgan (62), ein erstes Vortrum (98) und ein erstes Rücktrum (100) bildend, beim ersten Ende (86) des Arbeitsweges (90) um ein erstes Umlenkrad (102) und beim zweiten Ende (88) des Arbeitsweges (90) um ein zweites Umlenkrad (104) geführt ist, ein am ersten Antriebsorgan (62) angeordnetes Mitnehmerorgan (128) mit einem am Wagen (56) befestigten Führungsorgan (130) immer in Eingriff steht und das Führungsorgan (130) quer zum ersten Vortrum (98) und zum ersten Rücktrum (100) verläuft;
- das zweite Antriebsorgan (64) permanent mit einem am Wagen (56) gelagerten Abnehmerrad (106) zusammenwirkt;
- ein in sich geschlossenes drittes Antriebsorgan (84), ein weiteres Vortrum (108) und ein weiteres Rücktrum (110) bildend, beim oben liegenden Ende (92) des Vertikalweges (96) um ein oben liegendes Umlenkrad (112) und beim unten liegenden Ende (94) des Vertikalweges (96) um ein unten liegendes Umlenkrad (114) geführt ist, ein am dritten Antriebsorgan (84) angeordnetes weiteres Mitnehmerorgan (154) mit einem mit der Absaugdüse (82) verbundenen weiteren Führungsorgan (156) immer in Eingriff steht und das weitere Führungsorgan (156) quer zum weiteren Vortrum (108) und zum weiteren Rücktrum (110) des dritten Antriebsorgans (84) verläuft, und das dritte Antriebsorgan (84) mittels des Abnehmerrades (106) angetrieben ist; und
- die Umlaufgeschwindigkeit des ersten Antriebsorgans (62) unterschiedlich zur Umlaufgeschwindigkeit des zweiten Antriebsorgans (64) ist.

2. Vorrichtung nach Anspruch 1, **dadurch gekennzeichnet, dass** das zweite Antriebsorgan (64) um zwei am Wagen (56) gelagerte Führungsrollen (118, 118') und zwischen diesen um das Abnehmerrad (106) geführt ist, zur Vergrösserung des Umschlingungswinkels des Abnehmerrades (106).

3. Vorrichtung nach Anspruch 1 oder 2, **dadurch gekennzeichnet, dass** die Umlaufgeschwindigkeit des zweiten Antriebsorgans (64) grösser als die Umlaufgeschwindigkeit des ersten Antriebsorgans (62) ist.

4. Vorrichtung nach einem der Ansprüche 1 bis 3, **dadurch gekennzeichnet, dass** das erste Umlenkrad (102) und das zweite Umlenkrad (104) des ersten Antriebsorgans (62) gleich gross sind.

5. Vorrichtung nach einem der Ansprüche 1 bis 4, **dadurch gekennzeichnet, dass** ein in sich geschlossenes Zugorgan (76) um ein mittels des Antriebsmotors (66) angetriebenes erstes Antriebsrad (74) und ein mit dem ersten Umlenkrad (102) drehfest auf einer gemeinsamen Zwischenwelle (105) gelagertes Zwischenrad (124) geführt ist.

6. Vorrichtung nach Anspruch 5, **dadurch gekennzeichnet, dass** das zweite Antriebsorgan (64) um ein gleichachsig mit dem ersten Antriebsrad (74) gelagertes zweites Antriebsrad (78) und ein drittes Umlenkrad (107) geführt ist, wobei das dritte Umlenkrad (107) mindestens gleich weit von der Zwischenwelle (105) entfernt ist wie das zweite Ende (88) des Arbeitsweges (90).

7. Vorrichtung nach einem der Ansprüche 1 bis 6, **dadurch gekennzeichnet, dass** das oben liegende Umlenkrad (112) und das unten liegende Umlenkrad (114) des dritten Antriebsorgans (84) gleich gross sind.

8. Vorrichtung nach einem der Ansprüche 1 bis 7, **dadurch gekennzeichnet, dass** das erste, zweite und dritte Antriebsorgan (62, 64, 84) unabhängig voneinander als Ketten, Zahnriemen oder Riemen ausgebildet sind.

## Claims

1. An apparatus for cleaning a filter wall (14) having a horizontal rail (48) on which a carriage (56) is guided so as to be movable back and forth between a first end (86) and a second end (88) of an operating path (90) and having a vertical rail (80) which is fastened on the carriage (56) and on which a suction nozzle (82) is guided so as to be movable up and down between an upper end (92) and a lower end (94) of a vertical path (96); wherein
- a closed first drive member (62) and a closed second drive member (64) are drivable together in an unchanging direction of rotation by means of a drive motor (66);
- the first drive member (62), forming a first forward run (98) and a first return run (100), is guided at the first end (86) of the operating path (90) about a first guide wheel (102) and at the second end (88) of the operating path (90) about a second guide wheel (104), an entrainment means (128), which is arranged on the first drive member (62), is always in engagement with a guide member (130), which is fastened on the carriage (56), and the guide member (130) extends transversely with respect to the first forward run (98) and with respect to the first return run (100);
- the second drive member (64) cooperates permanently with a pick-up wheel (106) which is mounted on the carriage (56);
- a closed third drive member (84), forming a further forward run (108) and a further return run (110), is guided at the upper end (92) of the vertical path (96) about an upper guide wheel (112) and at the lower end (94) of the vertical path (96) about a lower guide wheel (114), a further entrainment means (154), which is arranged on the third drive member (84), is always in engagement with a further guide member (156), which is connected to the suction nozzle (82), and the further guide member (156) extends transversely with respect to the further forward run (108) and with respect to the further return run (110) of the third drive member (84), and the third drive member (84) is driven by means of the pick-up wheel (106); and
- the rotational speed of the first drive member (62) is different to the rotational speed of the second drive member (64).

2. The apparatus as claimed in claim 1, **characterized in that** the second drive member (64) is guided about two guide rollers (118, 118') which are mounted on the carriage (56) and about the pick-up wheel (106) between said guide rollers, for enlarging the angle of contact of the pick-up wheel (106).

3. The apparatus as claimed in claim 1 or 2, **characterized in that** the rotational speed of the second drive member (64) is greater than the rotational speed of the first drive member (62).

4. The apparatus as claimed in one of claims 1 to 3, **characterized in that** the first guide wheel (102) and the second guide wheel (104) of the first drive member (62) are the same size.

5. The apparatus as claimed in one of claims 1 to 4, **characterized in that** a closed pulling member (76) is guided about a first drive wheel (74), which is driven by means of the drive motor (66), and an intermediate wheel (124), which is mounted non-rotatably on a common intermediate shaft (105) with the first guide wheel (102).

6. The apparatus as claimed in claim 5, **characterized in that** the second drive member (64) is guided about a second drive wheel (78), which is mounted coaxially with the first drive wheel (74,) and a third guide wheel (107), wherein the third guide wheel (107) is at a spacing away from the intermediate shaft (105) which is at least as far as the second end (88) of the operating path (90).

7. The apparatus as claimed in one of claims 1 to 6, **characterized in that** the upper guide wheel (112) and the lower guide wheel (114) of the third drive member (84) are the same size.

8. The apparatus as claimed in one of claims 1 to 7, **characterized in that** the first, second and third drive members (62, 64, 84) are realized independently of one another with chains, toothed belts or belts.

## Revendications

1. Un dispositif destiné au nettoyage d'une paroi filtrante (14) ayant un rail horizontal (48) sur lequel un chariot (56) mobile est guidé en avant et en arrière entre une première extrémité (86) et une seconde extrémité (88) d'un chemin de travail (90), et un rail vertical (80) qui est fixé au chariot (56) et le long duquel une buse d'aspiration (82) est guidée de telle sorte qu'elle peut être déplacée vers le haut et vers le bas entre une extrémité supérieure (92) et une extrémité inférieure (94) d'un chemin vertical (96); dans lequel
- un premier organe d'entraînement fermé (62) et un deuxième organe d'entraînement fermé (64) peuvent être entraînés ensemble dans un sens de rotation invariable au moyen d'un moteur d'entraînement (66) ;
- le premier organe d'entraînement (62), formant une première section aller (98) et une première section retour (100), est guidé à la première extrémité (86) du chemin de travail (90) autour d'une première roue de renvoi (102) et à la seconde extrémité (88) du chemin de travail (90) autour d'une seconde roue de renvoi (104), un élément d'entraînement (128) disposé sur le premier organe d'entraînement (62) est toujours en prise avec un élément de guidage (130) fixé au chariot (56) et l'élément de guidage (130) est disposé transversalement par rapport à la première section aller (98) et par rapport à la première section retour (100);
- le deuxième organe d'entraînement (64) interagit en permanence avec une roue de transmission (106) disposée sur le chariot (56);
- un troisième organe d'entraînement fermé (84), formant une autre section aller (108) et une autre section retour (110), est guidé à l'extrémité supérieure(92) du chemin vertical (96) autour d'une roue de renvoi supérieure(112) et à l'extrémité inférieure (94) du chemin vertical (96) autour d'une roue de renvoi inférieure (114), un autre élément d'entraînement (154) disposé sur le troisième organe d'entraînement (84) est toujours en prise avec un autre élément de guidage (156) relié à la buse d'aspiration (82) et cet autre élément de guidage (156) est disposé transversalement par rapport à cette autre section aller (108) et par rapport à cette autre section retour (110) du troisième organe d'entraînement (84), et ce troisième organe d'entraînement (84) est entraîné par la roue de transmission (106); et
- la vitesse de rotation du premier organe d'entraînement (62) est différente de la vitesse de rotation du deuxième organe d'entraînement (64).

2. Un dispositif selon la revendication 1, **caractérisé en ce que** le deuxième organe d'entraînement (64) est guidé autour de deux poulies de guidage (118, 118') montées sur le chariot (56) et autour de la roue de transmission (106) entre ces deux poulies de guidage pour agrandir l'angle d'enroulement de la roue de transmission (106).

3. Un dispositif selon les revendications 1 et 2, **caractérisé en ce que** la vitesse de rotation du deuxième organe d'entraînement (64) est plus grande que la vitesse de rotation du premier organe d'entraînement (62).

4. Un dispositif selon l'une des revendications 1 à 3, **caractérisé en ce que** la première roue de renvoi (102) et la seconde roue de renvoi (104) du premier organe d'entraînement (62) ont la même dimension.

5. Un dispositif selon l'une des revendications 1 à 4, **caractérisé en ce qu'**un organe de traction fermé (76) est guidé autour d'une première roue motrice (74) qui est entraînée par le moteur d'entraînement (66) et une roue intermédiaire (124) montée solidairement en rotation sur un arbre intermédiaire commun (105) avec la première roue de renvoi (102).

6. Un dispositif selon la revendication 5, **caractérisé en ce que** le deuxième organe d'entraînement (64) est guidé autour d'une seconde roue motrice (78) montée coaxialement avec la première roue motrice (74) et une troisième roue de renvoi (107), la troisième roue de renvoi (107) étant au moins aussi loin de l' arbre intermédiaire (105) que la seconde extrémité (88) du chemin de travail (90).

7. Un dispositif selon l'une des revendications 1 à 6, **caractérisé en ce que** la roue de renvoi supérieure (112) et la roue de renvoi inférieure (114) du troisième organe d'entraînement (84) sont de la même dimension.

8. Un dispositif selon l'une des revendications 1 à 7, **caractérisé en ce que** le premier, le deuxième et le troisième organe d'entraînement (62, 64, 84) sont réalisés indépendamment l'un de l'autre à partir de chaînes, courroies dentées ou courroies.
